Europäisches Patentamt

(19) European Patent Office

Office européen des brevets

(11) Publication number: **0 056 734**

**A1**

(12) **EUROPEAN PATENT APPLICATION**

(21) Application number: **82300278.7**

(22) Date of filing: **19.01.82**

(51) Int. Cl.³: **A 01 K 5/02**

(30) Priority: **19.01.81 US 226414**

(43) Date of publication of application:
**28.07.82 Bulletin 82/30**

(84) Designated Contracting States:
**DE FR GB IT NL**

(71) Applicant: **U.S. INDUSTRIES, INC.**
**One Cummings Point Road Post Office Box 10207**
**Stamford Connecticut(US)**

(72) Inventor: **Williams, William Ronald**
**1476 East Raintree Drive**
**Roswell Georgia(US)**

(74) Representative: **Robinson, Anthony John Metcalf**
**Kilburn & Strode 30 John Street**
**London, WC1N 2DD(GB)**

(54) **Animal feed systems.**

(57) A feed gate arrangement is provided for the feeder units of automatic poultry feed systems and the like, of the type having at least one feed conveyor (3) with a moving feed carrier, such as an endless drag chain (4). The feeder unit includes a housing (5) through which the conveyor chain moves, and a mechanism to add fresh, make-up feed to the conveyor chain. The feed gate comprises a valve plate (7) slidably mounted for vertical movement in an outlet trough of the housing, and meters the flow of feed onto the underpassing conveyor chain. The valve plate includes a laterally extending adjustment tab (9), which overlies an exterior surface of the housing, and is detachably anchored thereto at various vertical positions by a fastener (11) for adjusting the conveyor feed level from the exterior of the feeder unit.

FIG. I

Croydon Printing Company Ltd.

## ANIMAL FEED SYSTEMS

This invention relates to automatic animal feed systems, and in particular to a feed gate arrangement for make-up feeder units, such as corner hoppers.

Feeder units are used in conjunction with automatic animal feed systems, such as for poultry, and add fresh, make-up feed to the conveyor. One type of feeder unit is designed to be located at a corner of the conveyor, such as the mechanism described in Big Dutchman Instruction Manual No. 10-BK-0005 a copy of which is filed herewith; this type of feeder is referred to in the trade as a "corner hopper".

In such a system, the conveyor comprises a conveyor chain travelling in a stationary trough. The conveyor forms a closed rectangle lying in a horizontal plane, the two long sides of the rectangle extending along two parallel rows of cages with the birds therein facing outwardly towards the conveyor. At three corners of the rectangle, there are corner units at which the conveyor chain is merely guided around the corner while at the fourth corner there is a corner make-up feed hopper unit at which the chain is guided round the corner, the chain is driven and the level of feed in the trough is made up to a desired level to replenish the feed removed by the birds during the preceding circuit of the conveyor chain.

Such corner hoppers include an inclined receptacle with a remix wheel or sprocket mounted in the base thereof, which meters additional feed onto the conveyor chain. A sluice-type feed gate is mounted in the outlet trough of the conveyor, and selectively controls the level of feed on the conveyor chain, in accordance with the length of the conveyor, and the rate at which the feed is being consumed.

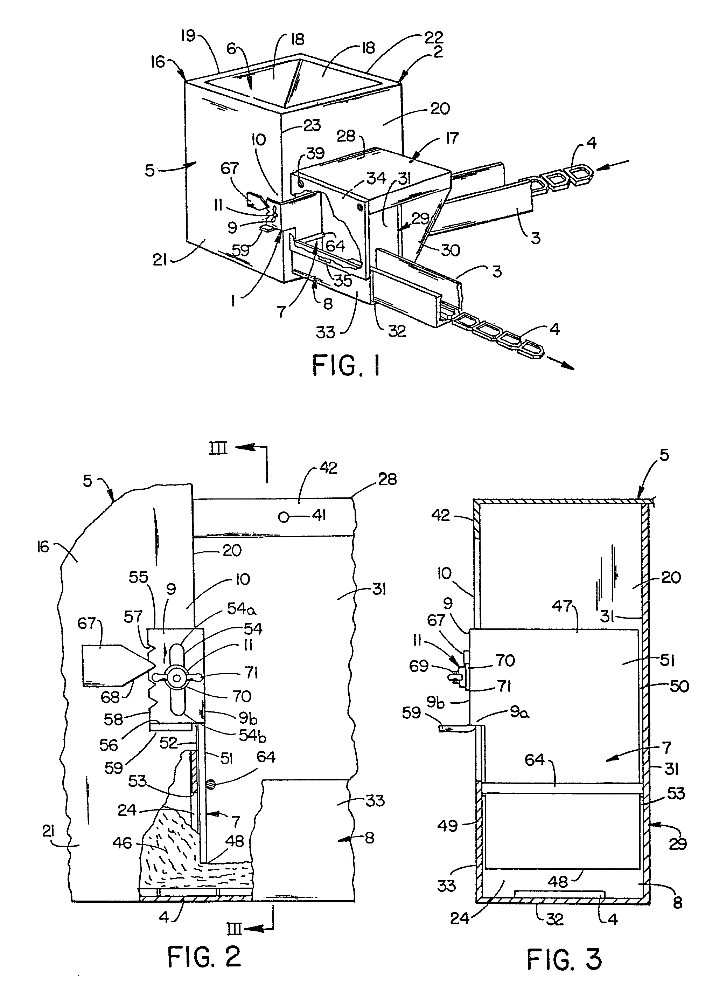

Heretofore, feed gates have been mounted on the interior of the corner hopper housing, adjacent to the chain drive sprocket as shown in Figures 1, 16 and on page 10 of the aforementioned Big Dutchman Instruction Manual No. 10-BK-0005. Hence, to adjust feed level on the conveyor chain, the user is required to bodily remove the housing cover, loosen the wing nut on the interior plate of the housing, and then adjust the position of the gate. The housing cover plates are sometimes lost or misplaced, thereby permitting foreign objects to enter into the corner hopper and damage the unit. Further, the failure of the user to promptly replace the housing cover can possibly create a safety hazard, as can the proximity of the adjustment wing nut to the drive sprocket, and the tendency of users to adjust the feed gate when the conveyor is operating, even though such procedures are not recommended and even proscribed.

According to the present invention, there is provided a feeder unit for an automatic animal feed system of the type having at least one feed conveyor with a moving feed carrier; the feeder unit comprising a housing through which the feed carrier moves, means for adding feed to a return area of the feed carrier, and an outlet trough disposed downstream of the feed adding means, characterised by an adjustable feed gate comprising: a valve plate having means for slidably mounting the same in the outlet trough for translation along a generally vertical plane; the valve plate having a lower, free edge disposed above the feed carrier in the output trough for metering the flow of feed from the feed adding means onto the feed carrier; an adjustment tab attached to and moving with the plate; the adjustment tab extending laterally from the plate, and overlying an exterior surface of the feeder unit housing; and means for detachably anchoring the adjustment tab to the housing at selected vertical positions for varying the conveyor feed level from the exterior of the feeder unit. Thus, the feed gate can be quickly, easily and accurately adjusted, even when the conveyor is in operation. Further, the operator need not remove the conveyor chain drive cover to adjust feed level, thereby alleviating the likelihood of misplacing the cover and helping to prevent foreign objects from entering into the conveyor. The feed gate arrangement is safe to operate, relatively inexpensive to manufacture, and capable of a long operating life.

Preferably, the detachable anchoring means comprises a plurality of detents spaced along a side edge of the adjustment tab; and a stop fixedly attached to the housing and having a portion thereof shaped for mating reception in the detents, whereby the stop in conjunction with the adjustment tab detents both indicates the level setting of the feed gate, and interconnects the plate with said housing.

The invention may be carried into practice in various ways but one carrier feed unit for an automatic poultry feed system will now be described by way of example with reference to the accompanying drawings, in which:

Figure 1 is a perspective view of a corner hopper with a portion thereof broken away to reveal a feed gate arrangement therefor embodying the present invention;

Figure 2 is a side elevational view of the corner hopper, with the cover plate removed, and portions thereof broken away to reveal the feed gate;

Figure 3 is a fragmentary, vertical cross-sectional view of the corner hopper with removed cover plate, taken along line III-III of Figure 2;

Figure 4 is a fragmentary, top plan view of the corner feeder;

Figure 5 is a fragmentary, vertical cross-sectional view through the cover plate;

Figure 6 is a fragmentary, side elevational view of the corner hopper, shown with the feed gate anchored in a selected vertical position; and

Figure 7 is a fragmentary, side elevational view of the corner hopper, with the feed gate shown in an unanchored position for shifting the same to an alternate vertical setting.

The reference numeral 1 (Figure 1) generally designates a feed gate arrangement embodying the present invention, which is adapted for use in feeder units 2 for automatic poultry feed systems of the type having at least one feed conveyor 3 with a moving carrier therein, such as a feed chain 4. The feeder unit 2 includes a housing 5 through which the conveyor chain 4 moves, and a hopper mechanism 6 to add fresh, make-up feed to the conveyor chain. The feed gate arrangement 1 comprises a valve plate 7 slidably mounted for vertical movement in an outlet trough of the housing 5, and is disposed downstream of the hopper mechanism 6. The valve plate 7 meters the flow of feed onto the underpassing conveyor chain 4, and includes a laterally extending adjustment tab 9, which overlies an exterior surface 10 of the housing 5, and is detachably anchored thereto by a fastener 11 for adjusting the conveyor feed level from the exterior of feeder unit 2.

In this example, the housing 5 (Figure 1) of the corner hopper 2 includes two portions 16 and 17 disposed on the inlet and outlet sides respectively of the corner hopper 2. The inlet housing 16 has the hopper mechanism 6 therein, and includes downwardly inclined walls 18 which direct feed onto a remix wheel (not shown) rotatably mounted in a pocket at the base of the hopper walls 18. The remix wheel (not shown) dispenses fresh, make-up feed from the hopper 6 onto the conveyor chain 4 at a location disposed upstream of the feed gate 1.

The inlet housing 16 further includes a pair of sidewalls 19 and 20, and end walls 21 and 22 which are interconnected in a generally rectangular configuration. The end wall 21 is adapted to be positioned facing the exterior side of the feed system, and forms a corner 23 along its inward edge at the intersection with the sidewall 20. The housing sidewall 20 further includes a rectangular opening 24 (Figure 2) at the lower forward edge of the wall, through which the conveyor chain 4 moves on the outlet side of the corner hopper 1, as will be described in greater detail hereinafter.

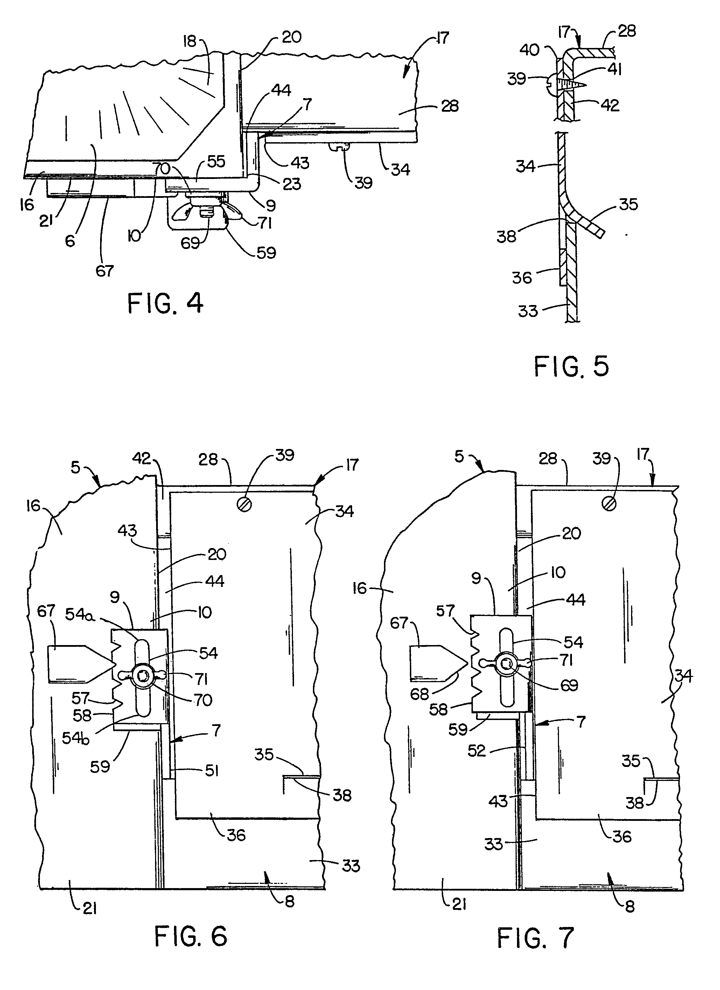

The outlet side 17 of the housing 5 extends inwardly, or to the right from the housing sidewall 20 and, in the illustrated example, is set back slightly from the plane of the forward end wall 21. The outlet housing 17 includes an upper plate 28 having a J-shaped channel 29 disposed near the forward edge of the plate 28, and a triangular gusset 30 positioned at the outer end of the housing 17 to securely interconnect the upper plate 28 with the channel 29. The channel 29 includes a rear wall 31, a base 32, and a front wall 33, which define the outlet trough 8, and extend along the adjacent housing edges which form the outlet opening 24 so that the outlet trough 8 is longitudinally aligned and centred therewith. A chain drive sprocket (not shown) is mounted in the outlet trough 8 at a location downstream of the feed gate 1, and drives the conveyor chain 4. A removable cover plate 34 extends between the upper edge of the trough wall 33 and the housing plate 28
to close the front of the outlet housing 17.  With
reference to Figure 5, in this example, the cover
plate 34 includes a rearwardly bent tab 35 adjacent
the lower edge 36 of the cover plate 34, which
engages the upper edge 38 of the trough wall 33.
Suitable fasteners, such as sheet metal screws 39,
are located along the upper edge 40 of cover plate
34, and extend into mating apertures 41 in a
depending, apron portion 42 of the upper plate 28,
thereby securely interconnecting the cover plate
34 with the outlet housing 17.  The lower edge 36
of the cover plate 34 laps over the trough edge 34
and presents a very neat appearance.  The cover plate
34 can easily be removed from the outlet housing 17 to
obtain access to the conveyor chain drive (not shown)
by simply removing the screws 38, and lifting the
cover plate 34 upwardly and outwardly, so that the
tab 35 disengages the sidewall edge 38.  As best
illustrated in Figures 6 and 7, the left hand side
edge 43 of the cover plate 34 is spaced from the
housing wall 20 to form a gap 44 therebetween, having
a width sufficient to permit the feed gate 1 to translate laterally during feed gate adjustment, as
discussed below.  In this example, the gap 44 has a
width of approximately 6.4 mm.

     With reference to Figures 1-3, the valve plate
portion 7 of the feed gate 1 has a generally rectangular plan shape, with an upper edge 47, a lower
edge 48, a forward side edge 49, and a rearward side edge 50. The valve plate 7 has substantially flat, coplanar exterior and interior surfaces 51 and 52 respectively, and is rigid. The valve plate side edges 49 and 50 are parallel with, and adjacent to the housing sidewalls 33 and 29 respectively, so as to control the size of the gate opening by raising and lowering the valve plate 7. The lower edge 48 of the valve plate 7 extends below the upper edge 53 of the outlet opening 24, so as to restrict the flow of feed 46 flowing through the outlet opening 24 to a preselected height above the conveyor chain 4.

The adjustment tab 9 extends laterally from valve plate 7 (to the left as viewed in Figures 1 and 2) and is integrally connected therewith so that the valve plate 7 and the tab 9 move together. In this example, the adjustment tab 9 has a generally rectangular shape, with neck 9a which extends through the gap 44 (Figures 6 and 7) between the housing wall 20 and the cover plate edge 43. The tab neck 9a is bent along a corner edge 9b through a right angle to extend around the housing corner 23, and the body of the tab 9 overlies the exterior surface 10 of the forward housing sidewall 21. The adjustment tab 9 includes a slot 54 which extends along the longitudinal axis of the adjustment tab body in a substantially vertical orientation. The slot 54 receives the fastener 11 therethrough, and extends to adjacent the upper and lower ends 55 and 56 respectively of the tab 9. The upper end 54a of slot 54 is located in the tab 9 so as to prevent the bottom edge 48 of the valve plate 7 from engaging the conveyor chain 4. The lower end 54b of the slot 54 is positioned in the tab 9 at a location which prevents the valve plate 7 from being inadvertently withdrawn from behind a mounting bar 64. A plurality of spaced-apart notches or detents 57 are provided along the left-hand edge 58 of the tab 9 for purposes to be described in greater detail hereinafter. Further, a lip 59 extends outwardly from the lower end 56 of the tab 9 in a substantially perpendicular orientation thereto, and is shaped to be grasped for manually moving the feed gate 1 between various vertical positions.

The feed gate 1 is mounted at the entrance to the outlet trough 8 for sliding translation therein along a substantially vertical plane. In this example, the rigid bar 64 extends transversely between the outlet trough sidewalls 31 and 33 at an elevation slightly above the upper edge 53 of the housing outlet opening 24. The bar 64 extends substantially horizontally, and has its ends welded to the interior sides of the outlet sidewalls 31 and 33. The bar 64 is spaced downstream from the exterior surface of the housing wall 20 a distance slightly greater than the thickness of the feed gate plate 7 to form a space or slot in which the feed gate 1 is inserted and slidingly retained.

The vertical position of the feed gate 1 is positively retained in a preselected vertical position by a stop 67. The stop 67 is fixedly attached to the forward housing sidewall 21, and includes a wedge-shaped end 68 which is shaped to be matingly received in the detents 57. The fastener 11 comprises a threaded stud or bolt 69 with its interior end anchored fixedly in the housing sidewall 21. The shank of the bolt 69 extends through the tab slot 54, and a washer 70 and wing nut 71 are attached to the terminal end of the bolt 69. During operation, the adjustment tab 9 is positioned on the housing 5 so that the stop 67 engages one of detents 57, and the wing nut 71 is then tightened, so as to securely maintain engagement between the stop 67 and the adjustment tab 9 and thereby positively lock the feed gate 1 in place.

The tab slot 54 has a width which is substantially greater than the diameter of the fastener bolt 69, so that when the wing nut 71 is loosened, the tab 9 can be moved laterally to the right, as shown in Figure 7, to disengage the tab detents 57 from the stop 67, and vertically reposition the feed gate 1 at a new height. When the new gate height has been reached, the tab 9 is shifted back laterally to the left, as shown in Figure 6, so that a different detent 57 engages the stop 67, and the wing nut is then retightened. The gap 44 between the housing sidewall 20 and the left-hand edge 43 of the cover plate 34 permits the feed gate 1 to be shifted laterally for vertical adjustment. The slot between the housing wall 20 and the support bar 64 is similarly large enough to permit some lateral shifting of the valve plate 7.

Further, the upper, tab end 9 of the feed gate 1 can be pivoted slightly in the gap formed by the support bar 64 to achieve additional lateral movement to move the detents 57 and stop end 68 into and out of engagement or registry.

In use, the feed gate 1 is adjusted by simply loosening the wing nut 71, grasping the lip 59, and moving the upper end of the feed gate laterally to the right so that the stop 67 disengages from the associated detent 57. The feed gage 1 is then raised or lowered to the desired level, and shifted back to the left so that the stop 67 engages a horizontally aligned one of the tab detents 57. Next, the wing nut 71 is tightened to securely anchor the feed gate 1 in place. The engagement of the stop 67 with one of the detents 57 on the tab 9 not only provides a positive anchoring of the feed plate 1 with respect to the corner hopper housing 5, but also provides a visual indication of the level setting of the feed gate 1 which is readily ascertainable from a quick glance at the front of the corner hopper 2.

The present feed gate arrangement 1 quickly, easily, and accurately adjusts the flow of feed onto the conveyor chain 4, and is manipulated from the exterior of the corner feeder 2. Since the cover plate 34 need not be removed to effect feed gate adjustment, those disadvantages associated with leaving the cover plate off the housing are greatly alleviated, if not eliminated. The detented adjustment tab and wedge-shaped stop not only positively anchor the feed gate in a preselected vertical position, but also provide a visual indicator for the feed gate setting.

CLAIMS

1. A feeder unit (2) for an automatic animal feed system of the type having at least one feed conveyor (3) with a moving feed carrier (4); the feeder unit comprising a housing (5) through which the feed carrier moves, means (6) for adding feed to a return area of the feed carrier, and an outlet trough (8) disposed downstream of the feed adding means, characterised by an adjustable feed gate (1) comprising: a valve plate (7) having means for slidably mounting the same in the outlet trough for translation along a generally vertical plane; the valve plate having a lower, free edge (53) disposed above the feed carrier in the output trough for metering the flow of feed from the feed adding means onto the feed carrier; an adjustment tab (9) attached to and moving with the plate; the adjustment tab extending laterally from the plate, and overlying an exterior surface of the feeder unit housing; and means (11) for detachably anchoring the adjustment tab to the housing at selected vertical positions for varying the conveyor feed level from the exterior of the feeder unit.

2. A feeder unit as claimed in Claim 1 in which detachable anchoring means comprises: a plurality of detents (57) spaced along a side edge of the adjustment tab; and a stop (67) fixedly attached to the housing and having a portion thereof shaped for mating reception in the detents, whereby the stop in conjunction with the adjustment tab detents both indicates the level setting of the feed gate, and interconnects the plate with said housing.

3. A feeder unit as claimed in Claim 1 or Claim 2 in which the detachable anchoring means further comprises: a slot (54) disposed in the adjustment tab; and a threaded fastener (69) mounted in the housing and having a portion thereof extending through the tab slot, with a nut (71) disposed on that portion of the fastener which projects from the tab slot.

4. A feeder unit as claimed in Claim 1 or Claim 2 or Claim 3 in which the plate mounting means comprises: a bar (64) attached to and extending transversely across the outlet trough at a position adjacent the lower edge of the valve plate on the downstream side thereof for retaining the plate in a vertical orientation.

5. A feeder unit as claimed in Claims 3 and 4 in which the tab slot has a length which prevents the valve plate lower edge from engaging the feed carrier, and prevents the valve plate from being inadvertently withdrawn from behind the bar.

6. A feeder unit as claimed in any of Claims 1 to 5 in which the housing includes an inlet side in which said feed adding means is disposed, and an outlet side in which the outlet trough is disposed, and which includes a drive unit for powering the feed carrier; the housing outlet side including a removable cover (34) to give access to the drive unit, and the adjustment tab extending alongside the said cover, whereby the plate is adjustable without removing the cover.

7.    A feeder unit as claimed in any of Claims
1 to 6 in which the adjustment tab includes an
outwardly extending lip adapted for grasping to move
the plate.

8.    A feeder unit as claimed in any of Claims 1
to 7 which comprises a corn hopper (6).

FIG. 1

FIG. 2

FIG. 3

0056734

1/2

0056734

FIG. 4

FIG. 5

FIG. 6

FIG. 7

European Patent Office

**EUROPEAN SEARCH REPORT**

Application number

EP 82 30 0278.7

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | |
| Y | GB - A - 1 554 405 (VIKSAL DEVELOPMENTS LTD.) <br> * page 1, line 15 to page 2, line 57; fig. * <br> -- | 1,3,5 | A 01 K 5/02 |
| Y | DE - U - 7 223 121 (GEBR. SCHMEING) <br> * claims 2, 4, 5, 7; page 2, lines 4 to 12; page 4, line 3 to page 6, line 21; fig. * <br> -- | 1,2,4 | |
| Y | US - A - 2 786 447 (H.L. MURRAY) <br> * column 1, line 14 to column 2, line 24; fig. 1, 2 * <br> -- | 1-3, 7,8 | TECHNICAL FIELDS SEARCHED (Int.Cl. ³) |
| Y | US - A - 3 433 205 (E.W. PITTARD) <br> * column 2, line 62 to column 3, line 13; fig. 1 * <br> -- | 1,6,7 | A 01 K 5/02 <br> A 01 K 39/00 <br> A 01 K 39/01 <br> A 01 K 39/012 |
| D,A | BIG DUTCHMAN INSTRUCTION MANUAL Vol. 4, No. 10-BK-0005, 1979, Atlanta "Champion Corner Feeders" pages 1 to 14 * <br> ---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| The present search report has been drawn up for all claims | | |
|---|---|---|
| Place of search <br> Berlin | Date of completion of the search <br> 23-02-1982 | Examiner <br> BERGZOLL |

EPO Form 1503.1 06.78